# FASCICULE DE BREVET EUROPEEN

(11) **EP 1 490 981 B1**
(45) Date de publication et mention de la délivrance du brevet: **13.09.2006**
(21) Numéro de dépôt: 03744877.6
(22) Date de dépôt: 11.03.2003
(51) Int. Cl.: H04B 1/52

(54) **SYSTEM DE DUPLEXAGE RADIOFREQUENCE ET SYSTEMES DE DIFFUSION OU DE COMMUNICATION L UTILISANT**
HOCHFREQUENZ-DUPLEXSYSTEM UND RUNDSENDE- ODER KOMMUNIKATIONSSYSTEM UNTER BENUTZUNG DES SYSTEMS
RADIOFREQUENCY DUPLEXING SYSTEM AND BROADCASTING OR COMMUNICATION SYSTEMS USING SAID SYSTEM

(30) Priorité: 22.03.2002 FR 0203632
(43) Date de publication de la demande: 29.12.2004
(73) Titulaire: Thales, 75008 Paris (FR)
(72) Inventeur: DAVID, Jérome, Thales Intellectual Property, F-94117 Arcueil cedex (FR); BLAISE, René, Thales Intellectual Property, F-94117 Arcueil (FR)
(74) Mandataire: Lucas, Laurent Jacques
(86) Numéro de dépôt international: PCT/FR2003/000781
(87) Numéro de publication internationale: WO 2003/081796

(56) Documents cités:
- EP-A- 0 724 337

## Description

L'invention concerne les systèmes de diffusion interactifs et les systèmes de communication. Notamment, elle concerne le duplexage radiofréquence des deux voies utilisées par ces systèmes.

Depuis quelques années déjà, les systèmes de diffusion actuels s'orientent vers un nouveau concept: l'interactivité. Cela est permis par l'utilisation de deux voies. La voie descendante contenant le programme à diffuser permet de transmettre le signal d'une station de base à l'utilisateur. La voie montante constituant la voie de retour permet de transmettre le signal de l'utilisateur à la station de base. Le duplexage permet à ces deux voies: la voie descendante et la voie montante de coexister. Un tel duplexage est utilisé depuis plusieurs années par les systèmes de diffusion analogique par câble, et plus récemment par les systèmes de diffusion numériques par câble et par satellite.

Avec les systèmes de diffusion numériques herziens et notamment la télévision numérique herzienne DVB-T, l'application du concept d'interactivité à ces nouveaux systèmes de diffusion est envisagée. Pour permettre cela, le duplexage dans le domaine radiofréquence est apparu comme solution.

Dans les systèmes de communications ou de diffusion radiofréquences totalement duplexés, le duplexeur RF permet de coupler les deux voies radiofréquences des deux canaux séparés: Voie montante et voie descendante sur une seule et même antenne.

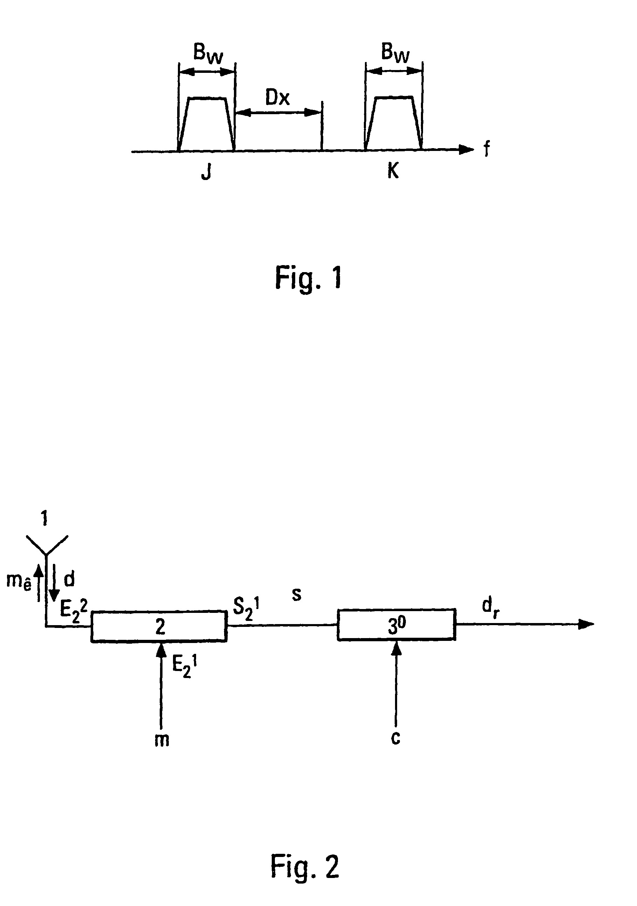

Les duplexeurs RF actuels imposent une distance fréquentielle minimale Dx entre la voie descendante J de largeur Bw et la voie montante K de largeur Bw, appelée duplex distance, afin d'éviter les interférences entre les deux voies notamment afin que la voie descendante ne soit pas perturbée par la voie montante K. La figure 1 illustre sur l'axe fréquentiel une disposition possible de ces deux voies J et K en tenant compte de la duplex distance Dx.

Les techniques actuelles imposent ainsi une duplex distance de 40 MHz. Cela signifie que la voie montante K ne peut pas être émise dans une zone centrée sur la fréquence de voie descendante d'une largeur de 80MHz. Donc, avec les duplexeurs RF actuels, les systèmes de communications et de diffusion totalement duplexés utilisent une bande de fréquence très large uniquement pour une voie montante et une voie descendante. Le nombre d'opérateurs se partageant la bande de fréquence pour ce type d'application s'en trouve ainsi réduit.

La figure 2 montre un exemple de duplexeur RF selon les techniques actuelles utilisés par de tels systèmes de communications ou diffusion. Le duplexeur RF comporte un coupleur 3dB 2 recevant sur sa première entrée E₂¹ le signal m de la voie montante qu'il transmet à l'antenne 1 via sa deuxième entrée E₂². Le signal mₑ émis par l'antenne 1 correspond donc au signal m de voie montante atténué de 3dB. Cette perte d'insertion de 3dB pour la voie montante K implique une diminution de la couverture pour la transmission.

De plus, l'antenne 1 reçoit le signal d de voie descendante et la transmet à la deuxième entrée E₂² du coupleur 3dB 2 à laquelle elle est connectée. Le coupleur 2 transmet la somme s = d_{3dB} + m_{3dB} des signaux de voies descendante et de voie montante atténués de 3dB sur sa sortie S₂¹. Un filtre passe-bande 3° est couplé à cette sortie S₂¹ Ce filtre 3° est centré sur la fréquence du signal d de voie descendante et fournit, donc, le signal dᵣ = d_{3dB} correspondant au signal d de voie descendante atténuée de 3dB aux autres dispositifs du système de communication ou de diffusion dans lequel il est implémenté. Cette perte d'insertion de 3dB théorique (plus de 3dB en pratique) dans le duplexeur RF implique pour les opérateurs une perte de couverture importante.

De plus, dans les applications telles que la télévision numérique herzienne DVB-T, de tels duplexeurs RF sont implémentés dans les démodulateurs/décodeurs, appelés communément "Set-Top Box," placés chez un utilisateur "grand public". Donc, outre les problèmes techniques précédents, les duplexeurs RF devront satisfaire à des critères de faible encombrement (encombrement équivalent à celui des duplexeurs utilisés pour le câble/satellite). Enfin, le coût de réalisation de tels duplexeurs ne devra pas être supérieur à celui d'un dispositif de retour par modem (actuellement de l'ordre de 7-15 $).

Le brevet EP-A-0 724 337 décrit une tête de mât amplifiée permettant de transmettre des signaux d'une station de base vers une antenne et de transmettre des signaux reçus par une antenne vers une station de base.

La présente invention permet de palier ces inconvénients par extraction du signal de voie descendante avec une atténuation de 0dB théorique.

Dans une première variante, l'invention propose un système de duplexage radiofréquence, aussi appelé duplexeur RF, comportant :
- un premier coupleur 3dB 2 comportant:
   ■ une première entrée E₂¹ recevant le signal m de voie montante,
   ■ une deuxième entrée E₂² fournissant un signal mₑ fonction du signal m de voie montante, et recevant le signal d de voie descendante,
   ■ une première sortie S₂¹ fournissant la somme s desdits signaux d et m des voies descendante et montante atténués de 3dB théorique,
   ■ une deuxième sortie S₂² fournissant la somme s_{90°} desdits signaux d et m des voies descendante et montante atténués de 3dB et déphasée de 90° par rapport au signal s de la première sortie S₂¹,
- une antenne 1 couplée à la deuxième entrée E₂² émettant ledit signal mₑ et recevant le signal d de voie descendante,
- un dispositif d'extraction 3' de la voie descendante couplé à ces deux sorties S₂¹ et S₂² fournissant à partir de celles-ci le signal dᵣ correspondant au signal d de la voie descendante avec une atténuation théorique de 0dB; ledit dispositif d'extraction 3' comportant un premier filtre 31¹ couplé à la première sortie S₂¹ du coupleur 2.

Un autre objet de l'invention consiste en la réflexion de la voie montante par un dispositif couplé aux deux sorties S₂¹ et S₂² du coupleur 2 réfléchissant le signal m de la voie montante sur ces deux sorties S₂¹ et S₂² tel que le coupleur 2 fournisse sur la deuxième entrée E₂² ledit signal mₑ correspondant au signal m de voie montante avec une atténuation théorique de 0dB. Ledit dispositif de réflexion peut: soit être un dispositif 3" indépendant du dispositif d'extraction 3' dans sa deuxième variante, soit intégré dans ce dispositif d'extraction pour former un dispositif d'extraction/réflexion 3 dans sa troisième variante.

L'invention propose un mode de réalisation du dispositif d'extraction/réflexion 3 de la troisième variante. Ledit dispositif d'extraction/réflexion 3 comporte:
- un deuxième filtre 31², lesdits premiers et deuxième filtres 31¹ et 31² étant des filtres coupe bande centrés sur la fréquence du signal m de la voie montante,
- un deuxième coupleur 3dB 32 en quadrature par rapport au premier coupleur 2 comportant:
   ■ une première et une deuxième entrée E₃₂¹ et E₃₂² couplées respectivement aux sorties des premier et deuxième filtres 31¹ et 31²,
   ■ une première sortie S₃₂¹ couplée à la masse,
   ■ une deuxième sortie S₃₂² fournissant le signal dᵣ correspondant au signal d de la voie descendante avec une atténuation théorique de 0dB.

Une première amélioration de la troisième variante de l'invention est le pilotage en fréquence par un signal de commande en fréquence c_{f} des premier et deuxième filtres 31¹ et 31².

Une deuxième amélioration de la troisième variante de l'invention consiste en un dispositif de filtrage résiduel 4 comportant:
- une première et une deuxième entrée E₄¹ et E₄², la première entrée E₄¹ est couplée à la sortie S₃₂² du deuxième coupleur 32 et reçoit le signal dᵣ, la deuxième entrée E₄² est couplée à la première entrée E₂¹ du premier coupleur 2 et reçoit le signal m de la voie montante,
- un dispositif de déphasage et d'asservissement 41 contrôlé par ledit signal de commande en fréquence c_{f} et un signal de commande du gain c_{g}, déphasant le signal m de la voie montante de la deuxième entrée E₄² de 180° et l'asservissant en fonction des signaux de commande en fréquence c_{f} et de gain c_{g} pour fournir un signal *r̂*,
- un opérateur 42 somme ledit signal d, de voie descendante atténué théoriquement de 0dB de la première entrée E₄¹ et ledit signal *r̂* pour produire un signal x correspondant à la somme du signal d de voie descendante atténué de 0dB théorique avec un résidu atténué rₐ du signal m correspondant au résidu r présent dans le signal dᵣ atténué par le signal *r̂*.

Un autre objet de l'invention est un système de diffusion ou de communication numérique par ondes herziennes comportant le système de duplexage radiofréquence selon l'une des variantes ci-dessus, notamment un système de diffusion de type DVB-T.

Les caractéristiques et avantages de l'invention apparaîtront plus clairement à la lecture de la description, faite à titre d'exemple, et des figures s'y rapportant qui représentent :
- Figure 1, une représentation schématique de l'occupation de la bande de fréquence par les voies montantes et descendantes lors de l'utilisation d'un duplexeur RF selon l'état de l'art,
- Figure 2, un exemple schématique de duplexeur RF selon l'état de l'art,
- Figure 3, une représentation schématique d'une première variante du duplexeur RF selon l'invention,
- Figure 4, une représentation schématique d'une deuxième variante du duplexeur RF selon l'invention,
- Figure 5, une représentation schématique d'une troisième variante du duplexeur RF selon l'invention,
- Figure 6, un mode de réalisation de duplexeur RF basée sur la troisième variante de la figure 5,
- Figure 7, un exemple d'amélioration apportée au duplexeur RF de la figure 6.

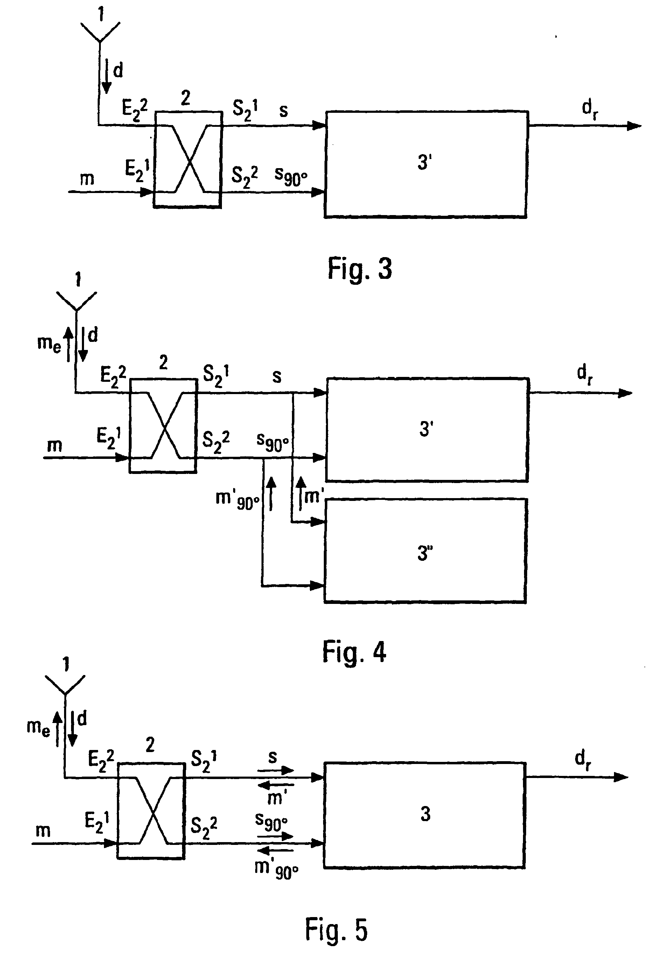

La figure 3 montre une première variante du système de duplexage radiofréquence selon l'invention. Le signal m de la voie montante est présenté à la première entrée E₂¹ d'un premier coupleur 2, qui est un coupleur 3dB. Le signal d de la voie descendante reçu par une antenne 1 est présenté à la deuxième entrée E₂² de ce premier coupleur 2. Le coupleur 2 fournit respectivement sur ses premières et deuxièmes sorties S₂¹ et S₂² les signaux s et s_{90°}. Ces signaux s et s_{90°} correspondent à la somme des signaux d et m de la voie descendante et de la voie montante présents sur les première et deuxième entrées E₂¹ et E₂² du coupleur 2 atténués en théorie de 3dB. Ces deux signaux s et s_{90°} sont déphasés de 90°.

Le dispositif d'extraction 3' de la voie descendante utilise le déphasage de 90° entre ces deux signaux s et s_{90°} pour fournir par recombinaison d'au moins une partie des deux signaux s et s_{90°} le signal dᵣ correspondant au signal d de voie descendante avec une atténuation théorique de 0 dB. Notamment, le dispositif d'extraction (3') peut extraire des signaux (s) et (s_{90°}) les signaux (d) et (d_{90°}) de la voie descendante, puis additionner ces signaux (d) et (d_{90°}) pour obtenir le signal (dᵣ). Suivant les capacités du dispositif d'extraction 3' le signal dᵣ peut éventuellement contenir un résidu r du signal m de la voie montante.

Une deuxième variante du système de duplexage radiofréquence selon l'invention est illustrée par la figure 4. Un dispositif de réflexion 3" de la voie montante est couplée aux premières et deuxièmes sorties S₂¹ et S₂². Ce dispositif de réflexion 3" reçoit donc les signaux s et s_{90°}. Il réfléchit les parties m' et m'_{90°} correspondant au signal m de la voie montante contenu respectivement dans ces signaux s et s_{90°} vers les première et deuxième sorties S₂¹ et S₂² du coupleur 2. Le coupleur 3dB 2, de part sa fonction, produit à partir des signaux m' et m'_{90°} le signal mₑ à émettre en les additionnant. Ce passage en réflexion permet des pertes très faibles sur la voie montante, c'est pourquoi le signal mₑ à émettre correspond au signal m de la voie montante atténué de 0dB théorique.

Dans la troisième variante du système de duplexage radiofréquence selon l'invention de la figure 5, les dispositifs d'extraction 3' et de réflexion 3" sont formés par un seul et même dispositif d'extraction/réflexion 3.

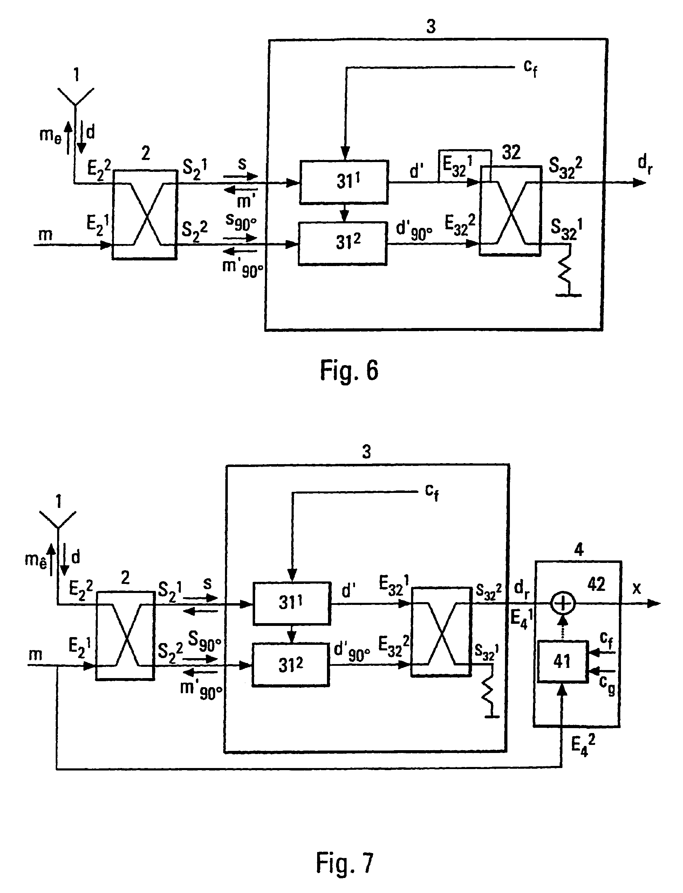

La figure 6 donne un mode de réalisation de la troisième variante du système de duplexage radiofréquence proposée par la figure 5. Le dispositif d'extraction/réflexion 3 comporte un premier et un deuxième filtres 31¹ et 31². Ces deux filtres 31¹ et 31² sont respectivement couplés aux première et deuxième sorties S₂¹ et S₂² du coupleur 2. Le filtre 31¹ reçoit donc le signal s et le filtre 31² le signal s_{90°}. Les filtres 31¹ et 31² sont adaptées à la réflexion des parties m' et m'_{90°} correspondant au signal m de la voie montante contenues respectivement dans les signaux s et s_{90°}; et à la transmission des parties d' et d'_{90°} correspondant au signal d de la voie descendante contenues respectivement dans les signaux s et s_{90°}. Par exemple, les filtres 31¹ et 31² sont des filtres coupe bande centrés sur la fréquence du signal m de la voie montante.

Le dispositif d'extraction/réflexion 3 comporte en outre un deuxième coupleur 32. Les filtres 31¹ et 31² sont alors encadrés par deux coupleurs 2 et 32 en quadrature. Respectivement, le premier filtre 31¹ est couplé à la première entrée E₃₂¹ du deuxième coupleur 32 et le deuxième filtre 31² à la deuxième entrée E₃₂² du deuxième coupleur 32. De part leur position en quadrature, la somme des signaux déphasée m et m_{90°}, respectivement d et d_{90°}, est obtenue sur l'entrée E₂², respectivement sur la sortie S₃₂², de ces coupleurs 2, respectivement 32.

La première sortie S₃₂¹ du deuxième coupleur 32 est couplé à la masse. Ce deuxième coupleur 32 somme les deux signaux d' et d'_{90°} contenant un signal correspondant au signal d de la voie descendante seul ou avec un résidu du signal m de la voie montante. En utilisant des coupleurs identiques, la perte de couplage de 3dB dans chacun des coupleurs s'annule en sommant les deux signaux d' et d'_{90°} en sortie des filtres 31¹ et 31². Donc, le deuxième coupleur 32 fournit sur sa deuxième sortie S₃₂² un signal dᵣ correspondant au signal d de la voie descendante atténué de 0dB théorique seul ou avec un résidu r du signal m de la voie montante. Le résidu r du signal m de la voie montante correspond au signal m de la voie montante atténué de telle manière que son amplitude soit négligeable par rapport à l'amplitude du signal d de la voie montante récupéré en sortie du deuxième coupleur 32 (rapport des deux amplitudes <1%).

Comme le montre la figure 6, il est possible de prévoir la commande des filtres 31¹ et 31² par un signal de commande en fréquence c_{f}. Les filtres 31¹ et 31² gagnent ainsi une agilité en fréquence. Cette agilité en fréquence permet de réduire la duplex distance.

La figure 7 propose une amélioration du système de duplexage radiofréquence. Cette amélioration est obtenue par l'implémentation dans le système de duplexage radiofréquence d'un dispositif de filtrage résiduel 4. Le dispositif de filtrage résiduel 4 comporte une première entrée E₄¹ recevant le signal dᵣ et une deuxième entrée E₄² couplée à la première entrée E₂¹ du premier coupleur 2 recevant le signal m de voie montante.

Comme cela a été mentionné précédemment, le signal dr obtenu en sortie du dispositif d'extraction 3' ou d'extraction/réflexion 3 peut contenir un résidu r correspondant au signal m de la voie montante. Le dispositif de filtrage résiduel 4 est conçu pour atténuer ce résidu r et fournir un signal x comportant le signal d de voie descendante atténué de 0dB théorique et le résidu atténué rₐ correspondant au signal m de la voie montante.

La figure 7 propose un mode de réalisation de ce dispositif de filtrage résiduel 4. Le dispositif de filtrage résiduel 4 comporte un dispositif de déphasage et d'asservissement d'amplitude 41 recevant le signal m de la voie montante. Un signal de commande en fréquence c_{f} et un signal de commande de gain c_{g} contrôlent ce dispositif de déphasage et d'asservissement d'amplitude 41 pour qu'il fournisse un signal *r̂* qui correspond à une estimation du résidu r déphasé de 180°. Ainsi, l'opérateur 42 somme le signal dᵣ de première entrée E₄¹ et l'estimation *r̂*. Cela permet une atténuation plus forte du signal m de la voie montante contenu dans le résidu r voire l'élimination du résidu r. L'opérateur 42 produit alors un signal x comportant le signal d de voie descendante atténué de 0dB théorique seul ou avec un résidu atténué rₐ correspondant au signal m de la voie montante.

Par exemple, ce dispositif de filtrage résiduel 4 améliore d'environ 30dB le filtrage, le résidu rₐ est donc plus faible de 30dB au le résidu r. Cela correspond à un gain de deux canaux en terme de duplex distance.

Les signaux de commande en fréquence c_{f} et de gain c_{g} utilisés par les deux filtres 31¹ et 31² et/ou par le dispositif de filtrage résiduel 4 peuvent, par exemple, être des signaux de contrôle sigma delta ou réalisés avec des convertisseurs analogique numérique. Ces signaux de commande c_{f} et c_{g} peuvent, notamment, être filtré passe-bas. Le signal de commande en fréquence c_{f} peut être obtenu par une capacité variable.

Les différentes variantes et modes de réalisation du système de duplexage radiofréquence selon l'invention peuvent être utilisés dans tout système numérique de diffusion ou communication par ondes herziennes. Elles permettent de réduire la duplex distance d'au moins un rapport 4.

Notamment, les modulateurs/démodulateurs de la télévision numérique de type DVB-T peuvent utiliser ces duplexeurs pour coupler les signaux de programme (voie descendante) avec les signaux de retour (voie montante) permettant l'interactivité des programmes, la programmation à la demande ("video on demand" ou "near video on demand" selon les termes anglo saxons communément utilisés). La transposition à la radio numérique est envisageable.

De manière plus générale, un tel système de duplexage radiofréquence permet tout couplage d'antenne ou de signaux de deux voies différentes avec une perte d'insertion théorique nulle pour la voie descendante, une perte d'insertion théorique nulle pour la voie montante et une duplex distance divisée au moins par 4.

## Revendications

1. Système de duplexage radiofréquence comportant :
- un premier coupleur 3dB (2) comportant:
■ une première entrée E₂¹ adaptée pour recevoir le signal m de voie montante,
■ une deuxième entrée E₂² adaptée pour fournir un signal mₑ fonction du signal m de voie montante, et pour recevoir le signal d de voie descendante,
■ une première sortie S₂¹ adaptée pour fournir la somme s desdits signaux d et m des voies descendante et montante atténués de 3dB théorique,
- une antenne (1) couplée à la deuxième entrée E₂² adaptée pour émettre ledit signal mₑ et pour recevoir le signal d de voie descendante,
- un premier filtre (31¹) couplé à la première sortie S₂¹ du coupleur (2),
**caractérisé en ce que** le système de duplexage comporte :
- ledit premier coupleur (2) comprenant une deuxième sortie (S₂²) adaptée pour fournir la somme S_{90°} desdits signaux d et m des voies descendante et montante atténués de 3dB théorique et déphasée de 90° théorique par rapport au signal s de la première sortie (S₂¹),
- un dispositif d'extraction (3') de la voie descendante couplé à ces deux sorties S₂¹ et S₂² adapté pour fournir à partir de celles-ci le signal dᵣ correspondant au signal d de la voie descendante avec une atténuation théorique de OdB; ledit dispositif d'extraction (3') comportant ledit premier filtre (31¹).

2. Système de duplexage radiofréquence selon la revendication précédente **caractérisé en ce que** ledit dispositif d'extraction (3') est adapté par extraire des signaux s et s_{90°} les signaux d et d_{90°} de la voie descendante, puis additionne ces signaux d et d_{90°} pour obtenir le signal dᵣ.

3. Système de duplexage radiofréquence selon l'une des revendications précédentes **caractérisé en ce qu'**il comporte un dispositif de réflexion (3") de la voie montante couplé aux deux sorties S₂¹ et S₂² du coupleur (2) adapté pour réfléchir le signal m de la voie montante sur ces deux sorties S₂¹ et S₂² tel que le coupleur (2) fournisse sur la deuxième entrée E₂² ledit signal mₑ correspondant au signal m de voie montante avec une atténuation théorique de 0dB.

4. Système de duplexage radiofréquence selon la revendication 1 **caractérisé en ce que** ledit dispositif d'extraction de la voie descendante est un dispositif d'extraction/réflexion (3) réfléchissant le signal m de la voie montante sur ces deux sorties S₂¹ et S₂² tel que le coupleur (2) fournisse sur la deuxième entrée E₂² ledit signal mₑ correspondant au signal m de voie montante avec une atténuation théorique de 0dB.

5. Système de duplexage radiofréquence selon la revendication précédente **caractérisé en ce que** ledit dispositif d'extraction/réflexion (3) comporte:
- un deuxième filtre (31²), lesdits premiers et deuxième filtres (31¹) et (31²) étant des filtres coupe bande centrés sur la fréquence du signal m de la voie montante,
- un deuxième coupleur 3dB (32) en quadrature par rapport au premier coupleur (2) comportant:
■ une première et une deuxième entrée E₃₂¹ et E₃₂² couplées respectivement aux sorties des premier et deuxième filtres (31¹) et (31²),
■ une première sortie S₃₂¹ couplée à la masse,
■ une deuxième sortie S₃₂² fournissant le signal d correspondant au signal d de la voie descendante avec une atténuation théorique de 0dB.

6. Système de duplexage radiofréquence selon l'une quelconque des revendications 4 ou 5 **caractérisé en ce que** les premier et deuxième filtres (31¹) et (31²) sont pilotés en fréquence par un signal de commande en fréquence c.

7. Système de duplexage radiofréquence selon la revendication précédente **caractérisé en ce que** le signal de commande en fréquence c_{f} est obtenu par filtrage passe-bas d'un signal produit par une capacité variable.

8. Système de duplexage radiofréquence selon l'une des revendications 4 à 7 **caractérisé en ce qu'**il comporte un dispositif de filtrage résiduel (4) :
- recevant le signal dᵣ, comportant le signal d de voie descendante atténué de 0dB théorique et un résidu r du signal m de voie montante de la sortie (S₃₂²), du deuxième coupleur (32),
- atténuant ce résidu r de signal m de la voie montante,
- et fournissant un signal x correspondant au signal d de voie descendante atténué de 0dB théorique et un résidu atténué rₐ du signal (m).

9. Système de duplexage radiofréquence selon la revendication précédente **caractérisé en ce que** ledit dispositif de filtrage résiduel (4) comporte:
- une première et un deuxième entrée E₄¹ et E₄², la première entrée E₄¹ est couplée à la sortie S₃₂² du deuxième coupleur (32) et reçoit le signal dᵣ, la deuxième entrée E₄² est couplée à la première entrée E₂¹ du premier coupleur (2) et reçoit le signal m de la voie montante,
- un dispositif de déphasage et d'asservissement (41) contrôlé par ledit signal de commande en fréquence c_{f} et un signal de commande du gain c_{g}, déphasant le signal m de la voie montante de la deuxième entrée E₄² de 180° et l'asservissant en fonction des signaux de commande en fréquence c_{f} et de gain c_{g} pour fournir un signal *r̂*,
- un opérateur (42) somme ledit signal dᵣ de voie descendante atténué théoriquement de 0dB de la première entrée E₄¹ et ledit signal *r̂* pour produire un signal x correspondant à la somme du signal d de voie descendante atténué de 0dB théorique avec un résidu atténué rₐ du signal m correspondant au résidu r présent dans le signal dᵣ atténué par le signal *r̂*.

10. Système de diffusion ou de communication numérique par ondes herziennes comportant le système de duplexage radiofréquence selon l'une quelconque des revendications précédentes.

11. Système de diffusion ou de communication selon la revendication précédente **caractérisé en ce qu'**il s'agit d'un système de type DVB-T.

## Claims

1. Radiofrequency duplexing system comprising:
- a first 3 dB coupler (2) comprising:
■ a first input E₂¹ designed to receive the uplink signal m,
■ a second input E₂² designed to supply a signal mₑ as a function of the uplink signal m and designed to receive the downlink signal d,
■ a first output S₂¹ designed to supply the sum s of said downlink signal d and uplink signal m attenuated by a theoretical 3 dB,
- an antenna (1) coupled to the second input E₂² designed to send said signal mₑ and to receive the downlink signal d,
- a first filter (31¹) coupled to the first output S₂¹ of the coupler (2),
**characterized in that** the duplexing system comprises:
- said first coupler (2) comprising a second output (S₂²) designed to supply the sum s_{90°} of said downlink signal d and uplink signal m attenuated by a theoretical 3 dB and with a theoretical 90° phase shift relative to the signal s of the first output (S₂¹),
- a downlink extraction device (3') coupled to these two outputs (S₂¹) and S₂² designed to supply from the latter the signal dᵣ corresponding to the downlink signal d with a theoretical attenuation of 0 dB; said extraction device (3') comprising said first filter (31¹).

2. Radiofrequency duplexing system according to the preceding claim, **characterized in that** said extraction device (3') is designed to extract from the signals s and s_{90°} the downlink signals d and d_{90°} and then adds together these signals d and d_{90°} to obtain the signal dᵣ.

3. Radiofrequency duplexing system according to either of the preceding claims, **characterized in that** it comprises an uplink reflection device (3") coupled to the two outputs S₂¹ and S₂² of the coupler (2) designed to reflect the uplink signal m onto these two outputs S₂¹ and S₂² such that the coupler (2) supplies on the second input E₂² said signal mₑ corresponding to the uplink signal m with a theoretical attenuation of 0 dB.

4. Radiofrequency duplexing system according to Claim 1, **characterized in that** said downlink extraction device is an extraction/reflection device (3) reflecting the uplink signal m onto these two outputs S₂¹ and S₂² such that the coupler (2) supply on the second input E₂² said signal mₑ corresponding to the uplink signal m with a theoretical attenuation of 0 dB.

5. Radiofrequency duplexing system according to the preceding claim, **characterized in that** said extraction/reflection device (3) comprises:
- a second filter (31²), said first filter (31¹) and second filter (31²) being band-stop filters centered on the frequency of the uplink signal m,
- a second 3 dB coupler (32) in quadrature relative to the first coupler (2) comprising:
■ a first input E₃₂¹ and a second input E₃₂² coupled respectively to the outputs of the first filter 31¹ and second filter 31²,
■ a first output S₃₂¹ coupled to ground,
■ a second output S₃₂² supplying the signal dᵣ corresponding to the downlink signal d with a theoretical attenuation of 0 dB.

6. Radiofrequency duplexing system according to either one of Claims 4 or 5, **characterized in that** the first filter (31¹) and second filter (31²) are frequency driven by a frequency control signal c_{f}.

7. Radiofrequency duplexing system according to the preceding claim, **characterized in that** the frequency control signal c_{f} is obtained by low-pass filtering of a signal produced by a variable capacitor.

8. Radiofrequency duplexing system according to any one of Claims 4 to 7, **characterized in that** it comprises a residual filtering device (4):
- receiving the signal dᵣ, comprising the downlink signal d attenuated by a theoretical 0 dB and a residue r of the uplink signal m of the output (S₃₂²), of the second coupler (32),
- attenuating this residue r of the uplink signal m,
- and supplying a signal x corresponding to the downlink signal d attenuated by a theoretical 0 dB and an attenuated residue rₐ of the signal m.

9. Radiofrequency duplexing system according to the preceding claim, **characterized in that** said residual filtering device (4) comprises:
- a first input E₄¹ and a second input E₄²; the first input E₄¹ is coupled to the output S₃₂² of the second coupler (32) and receives the signal dᵣ; the second input E₄² is coupled to the first input E₂¹ of the first coupler (2) and receives the uplink signal m,
- a phase shift and governing device (41) controlled by said frequency control signal c_{f} and a gain control signal c_{g}, shifting the phase of the uplink signal m of the second input E₄² by 180° and governing it according to the frequency control signal c_{f} and gain control signal c_{g} to supply a signal *r̂*,
- an operator (42) sums said downlink signal dᵣ theoretically attenuated by 0 dB of the first input E₄¹ and said signal *r̂* to produce a signal x corresponding to the sum of the downlink signal d attenuated by a theoretical 0 dB with an attenuated residue rₐ of the signal m corresponding to the residue r present in the signal dᵣ attenuated by the signal *r̂*.

10. Digital microwave broadcasting or communication system comprising the radiofrequency duplexing system according to any one of the preceding claims.

11. Broadcasting or communication system according to the preceding claim, **characterized in that** it is a DVB-T type system.

## Patentansprüche

1. Hochfrequenz-Duplexsystem, das aufweist:
- einen ersten 3dB-Koppler (2), der aufweist:
• einen ersten Eingang E₂¹, der ausgelegt ist, um das Signal m der Aufwärtsstrecke zu empfangen,
• einen zweiten Eingang E₂² , der ausgelegt ist, um ein Signal mₑ abhängig vom Signal m der Aufwärtsstrecke zu liefern, und um das Signal d der Abwärtsstrecke zu empfangen,
• einen ersten Ausgang S₂¹ der ausgelegt ist, um die Summe s der Signale d und m der Abwärtstrecke und der Aufwärtsstrecke, gedämpft um theoretische 3dB, zu liefern,
- eine Antenne (1), die mit dem zweiten Eingang E₂² gekoppelt und ausgelegt ist, um das Signal mₑ zu senden, und um das Signal d der Abwärtsstrecke zu empfangen,
- ein erstes Filter (31¹), das mit dem ersten Ausgang S₂¹ des Kopplers (2) gekoppelt ist,
**dadurch gekennzeichnet, dass** das Duplexsystem aufweist:
- den ersten Koppler (2), der einen zweiten Ausgang (S₂²) aufweist, der ausgelegt ist, um die Summe S_{90°} der Signale d und m der Abwärtsstrecke und der Aufwärtsstrecke, gedämpft um theoretische 3dB, zu liefern, und zwar um theoretische 90° bezüglich des Signals s des ersten Ausgangs (S₂¹) phasenverschoben,
- eine Extraktionsvorrichtung (3') der Abwärtsstrecke, gekoppelt mit diesen beiden Ausgängen S₂¹ und S₂² und ausgelegt, um ausgehend von diesen das Signal dᵣ entsprechend dem Signal d der Abwärtsstrecke zu liefern, und zwar mit einer theoretischen Dämpfung von 0dB; wobei die Extraktionsvorrichtung (3') das erste Filter (31¹) aufweist.

2. Hochfrequenz-Duplexsystem nach dem vorhergehenden Anspruch, **dadurch gekennzeichnet, dass** die Extraktionsvorrichtung (3') ausgelegt ist, um aus den Signalen s und S_{90°} die Signale d und d_{90°} der Abwärtsstrecke zu extrahieren, und dann diese Signale d und d_{90°} addiert, um das Signal dᵣ zu erhalten.

3. Hochfrequenz-Duplexsystem nach einem der vorhergehenden Ansprüche, **dadurch gekennzeichnet, dass** es eine Reflexionsvorrichtung (3") der Aufwärtsstrecke aufweist, die mit den beiden Ausgängen S₂¹ und S₂² des Kopplers (2) gekoppelt und ausgelegt ist, um das Signal m der Aufwärtsstrecke zu diesen beiden Ausgängen S₂¹ und S₂² zu reflektieren, damit der Koppler (2) am zweiten Eingang E₂² das Signal mₑ liefert, das dem Signal m der Aufwärtsstrecke mit einer theoretischen Dämpfung von 0dB entspricht.

4. Hochfrequenz-Duplexsystem nach Anspruch 1, **dadurch gekennzeichnet, dass** die Extraktionsvorrichtung der Abwärtsstrecke eine Extraktions-/Reflexionsvorrichtung (3) ist, die das Signal m der Aufwärtsstrecke zu diesen beiden Ausgängen S₂¹ und S₂² reflektiert, damit der Koppler (2) am zweiten Eingang E₂² das Signal mₑ liefert, das dem Signal m der Aufwärtsstrecke mit einer theoretischen Dämpfung von 0dB entspricht.

5. Hochfrequenz-Duplexsystem nach dem vorhergehenden Anspruch, **dadurch gekennzeichnet, dass** die Extraktions-/Reflexionsvorrichtung (3) aufweist:
- ein zweites Filter (31²), wobei das erste und das zweite Filter (31¹) und (31²) Bandsperrfilter sind, die auf die Frequenz des Signals m der Aufwärtsstrecke zentriert sind,
- einen zweiten 3dB-Koppler (32), der um 90° zum ersten Koppler (2) phasenverschoben ist und aufweist:
• einen ersten und einen zweiten Eingang E₃₂¹ und E₃₂², die mit den Ausgängen des ersten Filters (31¹) bzw. des zweiten Filters (31²) gekoppelt sind,
• einen ersten Ausgang S₃₂¹, der an Masse gekoppelt ist,
• einen zweiten Ausgang S₃₂², der das Signal dᵣ entsprechend dem Signal d der Abwärtsstrecke mit einer theoretischen Dämpfung von 0dB liefert.

6. Hochfrequenz-Duplexsystem nach einem der Ansprüche 4 oder 5, **dadurch gekennzeichnet, dass** das erste und das zweite Filter (31¹) und (31²) von einem Frequenzsteuersignal c_{f} frequenzgesteuert werden.

7. Hochfrequenz-Duplexsystem nach dem vorhergehenden Anspruch, **dadurch gekennzeichnet, dass** das Frequenzsteuersignal c_{f} durch Tiefpassfilterung eines Signals erhalten wird, das von einem variablen Kondensator erzeugt wird.

8. Hochfrequenz-Duplexsystem nach einem der Ansprüche 4 bis 7, **dadurch gekennzeichnet, dass** es eine Restfilterungsvorrichtung (4) aufweist, die:
- das Signal dᵣ, das das Signal d der Abwärtsstrecke, gedämpft um theoretische 0dB, und einen Rest r des Signals m der Aufwärtsstrecke enthält, vom Ausgang (S₃₂²) des zweiten Kopplers (32) empfängt,
- diesen Rest r des Signals m der Aufwärtsstrecke dämpft,
- und ein Signal x, das dem Signal d der Abwärtsstrecke, gedämpft um theoretische 0dB, entspricht, und einen gedämpften Rest rₐ des Signals m liefert.

9. Hochfrequenz-Duplexsystem nach dem vorhergehenden Anspruch, **dadurch gekennzeichnet, dass** die Restfilterungsvorrichtung (4) aufweist:
- einen ersten und einen zweiten Eingang E₄¹ und E₄², wobei der erste Eingang E₄¹ mit dem Ausgang S₃₂² des zweiten Kopplers (32) gekoppelt ist und das Signal dᵣ empfängt, während der zweite Eingang E₄² mit dem ersten Eingang E₂¹ des ersten Kopplers (2) gekoppelt ist und das Signal m der Aufwärtsstrecke empfängt,
- eine Phasenverschiebungs- und Regelvorrichtung (41), die vom Frequenzsteuersignal c_{f} und einem Verstärkungssteuersignal c_{g} gesteuert wird und das Signal m der Aufwärtsstrecke des zweiten Eingangs E₄² um 180° phasenverschiebt sowie in Abhängigkeit vom Frequenzsteuersignal c_{f} und vom Verstärkungssteuersignal c_{g} regelt, um ein Signal r zu liefern,
- einen Operator (42), der das Signal dᵣ der Abwärtsstrecke, gedämpft um theoretisch 0dB, des ersten Eingangs E₄¹ und das Signal r summiert, um ein Signal x zu erzeugen, das der Summe aus dem Signal d der Abwärtsstrecke, gedämpft um theoretisch 0dB, und einem gedämpften Rest rₐ des Signals m entspricht, der dem Rest r entspricht, der im durch das Signal r gedämpften Signal dᵣ enthalten ist.

10. Digitales Sende- oder Kommunikationssystem über Funkwellen, das das Hochfrequenz-Duplexsystem nach einem der vorhergehenden Ansprüche aufweist.

11. Sende- oder Kommunikationssystem nach dem vorhergehenden Anspruch, **dadurch gekennzeichnet, dass** es sich um ein System vom Typ DVB-T handelt.
